(19) **Europäisches Patentamt**
**European Patent Office**
**Office européen des brevets**

(11) **EP 3 560 145 B1**

(12) **EUROPEAN PATENT SPECIFICATION**

(45) Date of publication and mention
of the grant of the patent:
**25.11.2020 Bulletin 2020/48**

(51) Int Cl.:
**H04L 12/24** *(2006.01)* **H04W 24/02** *(2009.01)*

(21) Application number: **16829245.6**

(86) International application number:
**PCT/EP2016/082660**

(22) Date of filing: **23.12.2016**

(87) International publication number:
**WO 2018/114016 (28.06.2018 Gazette 2018/26)**

(54) **APPARATUS AND METHOD FOR IDENTIFYING NETWORK OBJECT GROUPS**

VORRICHTUNG UND VERFAHREN ZUR IDENTIFIZIERUNG VON NETZWERKOBJEKTGRUPPEN

APPAREIL ET PROCÉDÉ D'IDENTIFICATION DE GROUPES D'OBJETS DE RÉSEAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.10.2019 Bulletin 2019/44**

(73) Proprietor: **Telefonaktiebolaget LM Ericsson
(PUBL)
164 83 Stockholm (SE)**

(72) Inventors:
• **WANG, Mingxue
Athlone
Westmeath (IE)**
• **O'MEARA, Jimmy
Athlone
Westmeath (IE)**

(74) Representative: **Ericsson
Patent Development
Torshamnsgatan 21-23
164 80 Stockholm (SE)**

(56) References cited:
**WO-A1-02/080458** **US-A1- 2008 098 332**
**US-A1- 2013 114 464** **US-A1- 2013 329 588**

• **Ye Ouyang ET AL: "A Performance Analysis for
UMTS Packet Switched Network Based on
Multivariate KPIS", International Journal of
Next-Generation Networks Vol. 2, No. 1, 1 March
2010 (2010-03-01), pages 79-92, XP055397163,
Retrieved from the Internet:
URL:https://arxiv.org/ftp/arxiv/papers/100
3/1003.5438.pdf [retrieved on 2017-08-08]**

Printed by Jouve, 75001 PARIS (FR)

**Description**

Technical Field

The embodiments described herein relate to an apparatus and method for identifying network object groups, for example network object groups from a plurality of network objects forming part of a communications network.

Background

A network object group refers a group of network objects, for example cells, ENodeBs, or other network elements that have strong physical or logical relations or connectivity in a communication network. The communication networks can be traditional physical networks, or logical networks in virtual or cloud environments. The network objects can also be logical objects such as virtual ENodeBs, as well as being physical objects, such as physical ENodeBs.

Discovering or determining network object groups can be beneficial for many network management tasks, such as resource management tasks, service monitoring, event correlation, and root-cause analysis.

For example, if a cloud resource allocation management system is considered as an example, a customized resource allocation setting can be used for a group of virtual network nodes having similar resource usage modelling. In another example relating to a policy based control loop system, an expert defined resource allocation action policy can be applied for a group of network objects which have similar resource usage patterns for network resource slicing.

In yet another example relating to fault management, generally, a single fault in a network will cause a large amount of alarm signals from different interrelated network nodes. Knowledge about nodes which are strongly interrelated, i.e. a group with network objects that are strongly interconnected, is critical to correlate these alarms in a single network incident, so that noisy or secondary alarms can be reduced, and the root cause of the alarm pinpointed quickly.

Thus, from the above it will be appreciated that it is very beneficial to find the interaction or relationship between network objects for many network management tasks. Existing approaches to identifying a group of network objects depend on the physical topology information of networks. If network objects are connected together or geographically close, then interactions between network objects can be identified.

However, since the nature of networks is becoming more and more dynamic, with a growing trend of network virtualization, for example with software defined networking (SDN), then manually keeping track of topology information is becoming a daunting and impossible task.

Much work is therefore being undertaken to focus on automatic topology discovery. For example, some network vendors propose topology discovery protocols, such as, Cisco Discovery Protocol (CDP), Juniper Discovery Protocol (JDP) and Link Layer Discovery Protocol (LLDP). However, these protocols are generally not supported by all network vendors. Furthermore, they do not support multi-vendor networks. Some approaches use standard IP protocols, such as a simple network management protocol (SNMP), however, these protocols are applied to an IP network, and do not work for heterogeneous network objects.

One prior art technique for finding connectivity for heterogeneous networks or systems attempts to statistically map (i.e. correlate) traffic patterns observed between input/output ports of network elements to find links of network topology. If the statistical distribution of an output (e.g. package rate) of an element A is similar to the input of an element B, then such a prior art technique assumes that elements A and B are likely to be connected. Another known prior art technique uses a distance function between elements to compare values of a measurement between two devices over time to determine the mutual interaction between two elements of a system.

Furthermore, in a network, a policy-based management system contains policies and rules that govern or manage network resources, such as network elements or services. The policy managed resources are defined as policy targets. For example, a network interface card, an IP address can be selected as a policy target. However, when there is a large amount of network resources (e.g. millions of user requirements (UEs) in a network), it is impossible or difficult to select different policies for each network resource individually. Some policy models allow a policy target to be defined for a group of network resources, or a policy target group to be defined, for example based on network device types, IP ranges, resource locations, etc. However, these approaches do not work for network resources having inexplicit identifiers, dynamic or unknown characteristics, such as based on traffic patterns, busy hours, resource usage patterns, and so on.

There are known documents related to optimisation of network configuration using clustering techniques, namely WO02080458, US2013329588 and US2013114464. However, devices and operations as in the invention now to be described are neither disclosed nor suggested in these documents.

Furthermore, document US2008098332 discloses a method for grouping icons representing network elements on a graphical user interface. From the above it can be seen that identifying a group of network objects is becoming more problematic as technology changes.

Summary

It is an aim of the present embodiments to provide a method and apparatus which obviate or reduce at least one or more of the disadvantages mentioned above.

According to a first aspect there is provided a method of identifying a network object group from a plurality of network objects of a communications network. The method comprises grouping network objects based on a function of a plurality of key performance indicators, KPIs, which are common to the plurality of network objects, wherein grouping network objects based on a function of a plurality of KPIs comprises representing network objects of the plurality of network objects using a respective set of data vectors and a set of data vectors relates to the KPIs available at a network object. The grouping of network objects based on a function of a plurality of KPIs also comprises comparing at least one data vector between a plurality of network objects to determine a relation value and identifying a network object group at a first hierarchical level if the network objects have a relation value above a first threshold value

According to another aspect there is provided an apparatus for identifying a network object group from a plurality of network objects of a communications network. The apparatus comprises a processor and a memory, said memory containing instructions executable by said processor. The apparatus is operative to group network objects based on a function of a plurality of key performance indicators, KPIs, which are common to the plurality of network objects, wherein to group network objects based on a function of a plurality of KPIs said apparatus is operative to: represent network objects of the plurality of network objects using a respective set of data vectors and a set of data vectors relates to the KPIs available at a network object. To group network objects based on a function of a plurality of KPIs said apparatus is further operative to compare at least one data vector between a plurality of network objects to determine a relation value and to identify a network object group at a first hierarchical level if the network objects have a relation value above a first threshold value.

Brief description of the drawings

For a better understanding of examples of the present invention, and to show more clearly how the examples may be carried into effect, reference will now be made, by way of example only, to the following drawings in which:

Figure 1 shows an example of a method according to an embodiment;

Figure 2 shows an example of a system according to an embodiment;

Figure 3 shows an example of a method according to another embodiment;

Figure 4a shows an example of network objects in a communications network;

Figure 4b shows an example of how the network objects of Figure 4a may be grouped at a first hierarchical level, according to an embodiment;

Figure 4c shows an example of a graph illustrating how the network objects of Figure 4a may be grouped at a first hierarchical level, according to an embodiment;

Figure 5a shows an example of how the network objects of Figure 4a may be grouped at first and second hierarchical levels, according to an embodiment;

Figure 5b shows an example of a graph illustrating how the network objects of Figure 4a may be grouped at first and second hierarchical levels, according to an embodiment;

Figure 6 shows an example of an apparatus according to an embodiment; and

Figure 7 shows an example of an apparatus according to another embodiment.

Detailed description

The following sets forth specific details, such as particular embodiments for purposes of explanation and not limitation. But it will be appreciated by one skilled in the art that other embodiments may be employed apart from these specific details. In some instances, detailed descriptions of well known methods, nodes, interfaces, circuits, and devices are omitted so as not obscure the description with unnecessary detail.

The embodiments herein will be described in terms of identifying a group of network objects in a communication network. It is noted that the network objects may comprise any form of network object, including physical and logical objects, or a combination of both (including for example virtual objects, e.g. virtual ENodeBs or cells, or physical objects, e.g. physical ENodeBs or cells). Likewise, the communications network may be a traditional physical communications network, or a logical communications network in a virtual or cloud environment, or a combination of both.

As will be described further herein, the embodiments group network objects which have strong logic relations. The strength of relations is determined based on a function of a plurality of key performance indicators, KPIs, which the network objects have in common.

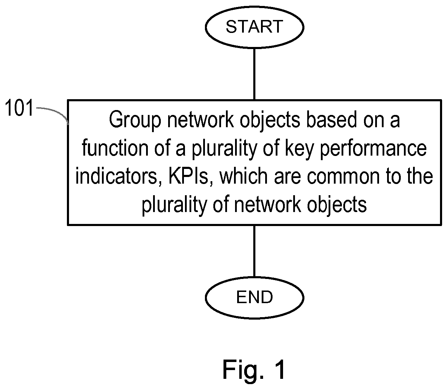

**Figure 1** shows a method according to an embodiment, for identifying a network object group from a plurality of network objects $x_1$ to $x_M$ of a communications network. The method comprises grouping network objects based on a function of a plurality of key performance indicators, KPIs $k_1$ to $k_N$, which are common to the plurality of network objects $x_1$ to $x_M$.

In one embodiment, grouping network objects based on a function of a plurality of KPIs comprises representing network objects of the plurality of network objects $x_1$ to $x_M$ using a respective set of data vectors, wherein a set of data vectors relates to the KPIs available at a network object. For example, for a network object x1, having KPIs $k_1$ to $k_N$, its set of data vectors can be represented as $k_1\_x1$ to $k_N\_x1$. Likewise, for a network object $x_M$, having KPIs $k_1$ to $k_N$, its set of data vectors can be represented as $k_1\_x_M$ to $k_N\_x_M$. It is noted that different network objects may have different numbers of KPIs.

The method comprises comparing at least one data vector between a plurality of network objects $x_1$ to $x_M$ to determine a relation value $r$. This may comprise, for example, comparing a particular data vector between the plurality of network objects, or comparing a sub-set of corresponding data vectors between a plurality of network objects. The method comprises identifying a network object group at a first hierarchical level if the network objects have a relation value $r$ above a first threshold value. As such, network objects having a relation value $r$ above a first threshold can be grouped within the same network object group.

In one example a relation value is a value representing the value of a particular KPI of one network object compared or correlated with a value of the same KPI of another network object. For example, if a KPI being compared between network objects is a *Up Link Throughput* (UL_TPT) KPI, the relation value may be a value for a relation determined based on throughput on the uplink. As such, in an example which uses this KPI to identify a group of network objects, this KPI from different network objects can be compared to determine a relation value, and the relation value compared against a first threshold level, such that network objects having a relation value, based on the KPI UL_TPT, which is above this first threshold level then being identified as forming part of the same network object group. Different algorithms may be used to determine a relation value, as will be described later in the application.

In this way the method finds network object groups having strong relationships (i.e. connectivity, similarity, interactivity) automatically based on the available KPIs of network objects. The method does not require special protocols, such as topology discovery protocols, or special network probes. The method can also be used with heterogeneous and homogeneous network objects.

In one embodiment, the step of comparing at least one data vector between a plurality of network objects comprises comparing a data vector relating to a single KPI common to the plurality of network objects.

In an alternative embodiment, the step of comparing at least one data vector between a plurality of network objects comprises comparing a sub-set of data vectors relating to a sub-set of KPIs common to the plurality of network objects. It is noted that a sub-set of KPIs may comprise any number of KPIs, from two KPIs in common to all of the KPIs which are common to the network objects.

Grouping network objects as described above can be considered as grouping network objects at a first hierarchical level. A plurality of different network object groups may therefore be identified, whereby the different network object groups are formed based on different criteria for grouping the network objects, for example by selecting which KPIs to compare when determining a relation value between network objects.

For example, network objects can be grouped in one or many aspects for different network management use cases. For example, grouping based on similar resource usage modelling for resource allocations. Grouping based on strong interrelations for alarm handling and root cause analysis to discovery inexplicit affinity.

By grouping network objects in different groups in this way, different network objects having strong relations in a particular group can be managed together. For example, an expert cell parameter setting can be used for cells having similar service or activity patterns. Network capacity provisioning or other expert management policy can be designed on for network nodes groups. It reduces network management complexity by managing object groups rather than each individual network object, which saves time and labour for network engineers or operators.

In addition to grouping network objects into network object groups at a first hierarchical level (e.g. a child level), according to another aspect two or more network object groups may themselves be grouped together at a second hierarchical level (e.g. a parent level).

Thus, according to another embodiment the method comprises grouping two or more network object groups at a second hierarchical level.

In one example, grouping two or more network object groups comprises grouping according to the strongest relationship between any network object of a first network object group with any network object of a second network object group.

In an alternative example, grouping two or more network object groups comprises grouping according to an average relation function between network objects of a first network object group and network objects of a second network object group.

By having some network object groups formed at a first hierarchical level, and other network object groups formed at a second hierarchical level, this can enable network management tasks to be performed in a more detailed level, for example for network objects which are more closely related in the child network object groups, and network management tasks performed at a second less detailed level for network objects which are less closely related in a parent group.

It is noted that in some embodiments two or more parent network object groups may be further grouped at a third hierarchical level, and so on.

It is noted that, in the embodiments described herein, different relation measure functions can be used to determine object groups in different hierarchical levels. For example, a first relation measure function (e.g. a Kolmogorov-Smirnov test) may be used to group objects in different big groups as parent groups, while a second relation measure function (e.g. a Pearson correlation) may be used to group objects in smaller groups for objects in each parent group. This allows more accurate hierarchical level grouping to be provided for the same network cases. This also means that it is not necessary to have different relation threshold values for the same measure function to determine hierarchical levels.

It is also noted that, in the embodiments described herein, different sets of KPIs can be used to determine object groups in different hierarchical levels. For example, KPIs k1, k2, k3 may be used to determine a parent group, while KPIs k1, k4, k5, k6 may be used to determine the smaller groups inside the parent group. This provides flexibility and enables more accurate hierarchical level grouping for same network cases.

According to one embodiment, grouping network objects based on a function of a plurality of KPIs comprises: weighting different KPIs using respective weighting factors; computing relation strength values between network objects using a plurality of weighted KPIs; and grouping network objects at a first hierarchical level if a relation strength value between the network objects is above a first threshold value.

Further details will now be provided using examples of how various network objects may be grouped as described above.

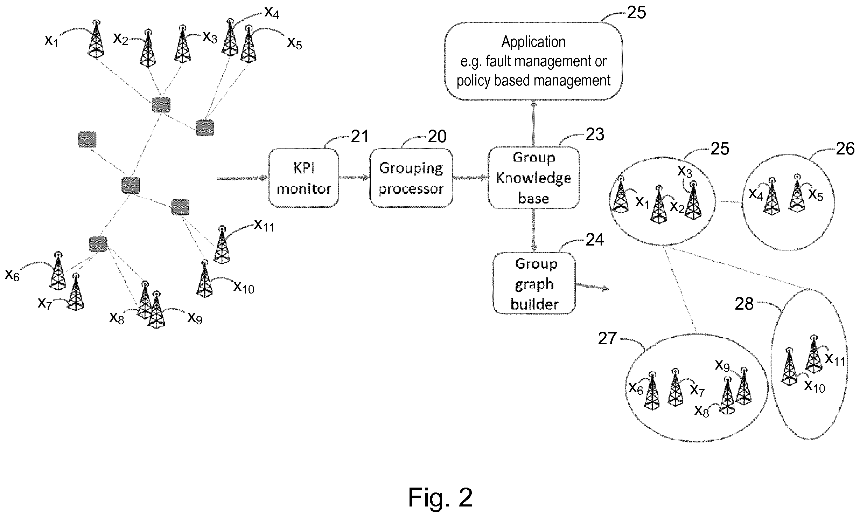

**Figure 2** shows an example of a system overview according to an embodiment. In the example of Figure 2, only one type of network object is illustrated as being grouped, i.e. base stations/cells $x_1$ to $x_{11}$. However, it is noted that multiple types of network objects can also be grouped together as long as they have a function that can be based on a plurality of common KPIs or common network metrics between them. Examples of KPIs include, throughput, availability, frequency of alarms, etc.

The system of Figure 2 comprises a grouping processor 20 which is configured to group network objects according to a function based on a plurality of KPIs which are common to the network objects. The system may comprise a KPI monitor 21 for monitoring such KPIs. The KPI monitor 21 may be configured to continuously monitor KPIs on a dynamic basis, or monitor KPIs periodically, or a combination of both.

Using the received KPI information from the KPI monitor 21, the grouping processor 20 is configured to group network objects into one or more network object groups at a first hierarchical level, and/or one or more groups of network object groups at a second hierarchical level, for example as described above. In the example of Figure 2 a first network object group 25 comprises network objects $x_1$, $x_2$, $x_3$, a second network object group 26 comprises network objects $x_4$, $x_5$, a third network object group 27 comprises network objects $x_6$, $x_7$, $x_8$, $x_9$, and a fourth network object group 28 comprises network objects $x_{10}$, $x_{11}$.

Once the grouping processor 20 has grouped network objects into one or more network object groups at a first hierarchical level (e.g. network object groups 25, 26, 27 and 28 in Figure 2), and/or one or more groups of network object groups at a second hierarchical level (not shown in this example), this information may be stored, for example in a group knowledge base 23, e.g. for use by other network nodes or modules.

For example, the information in the group knowledge base 23 may be used by an application module 25, for example a fault management application, or a policy based management application, for controlling or configuring or monitoring each network object group 25, 26, 27, 28. In this way different network object groups may be managed in different ways, if desired.

In one embodiment the information in the group knowledge base 23 may be used by a group graph builder module 24, for example to build pictorial graphs of the network object groups, which may be used for example by network engineers and the like.

It is noted that, in one example, the group knowledge base 23 and/or KPI monitor 21 form part of the grouping processor 20. It is noted that the grouping processor 20, and/or KPI monitor, and/or group knowledge base 23 may comprise a physical node or nodes, or form part of a cloud based system, or a combination of both.

Thus, in the example of Figure 2, the grouping result can be presented in group graphs and/or stored in a knowledge base. This knowledge can be used for network management applications, such as resource or policy based management, etc., as discussed further below.

There are a large number, e.g. hundreds of counters or KPIs available for metrics from managed network objects of networks. In the system of Figure 2, different KPIs or metrics represent different aspects or behaviors of network objects $x_1$ to $x_{11}$. For example, *Traffic* KPIs reflect the network traffic usage shapes, *Availability* KPIs show if the network is up for service. *Accessibility* KPIs show if the service can be accessed due to some other problems than blocking or interference. *Quality* KPIs indicate the radio link quality and end-user experience.

Below are listed some examples of standard KPIs relating to network objects (e.g. for a Cell) that may be used for identifying network object groups, although it is noted that other KPIs may also be used:

**SUMOHOATT:** Sum of Internal Handover Attempts (Outgoing Handover)
**SUMEOHOATT:** Sum of External Handover Attempts (Outgoing Handover)
**PMACTIVEUEDISUM:** Sum the number of user devices considered active in the downlink direction
**DL_TPT:** Down link throughput
**UL_TPT:** Up link throughput
**CELL_AVL:** Cell availability

It is noted that, in some examples, derived KPIs or metrics based on network events can also be used. It is noted that derived KPIs are KPIs which do not necessarily exist in the original network data, but are KPIs which are calculated, i.e. derived, based on network data. Examples of such derived KPIs include for example:

**Freq_Loss_of_Cell_Delineation:** Occurrence frequency count of loss_of_cell_delineation alarms
**Freq_PIU_restarted:** Occurrence frequency count of PIU_restarted alarms

It is noted that any KPIs relating to network objects may be used for network object grouping, and those listed above are just a few examples of KPIs relating to radio cells.

Further details will now be provided in connection with the steps that may be performed by the grouping processor 20 of Figure 2, according to an example embodiment. Once the KPIs of network objects are selected, the grouping processor can start the grouping process of network objects. It is noted that the KPIs may be selected in different ways, for example selected based on the ones that best suit a particular need of a group.

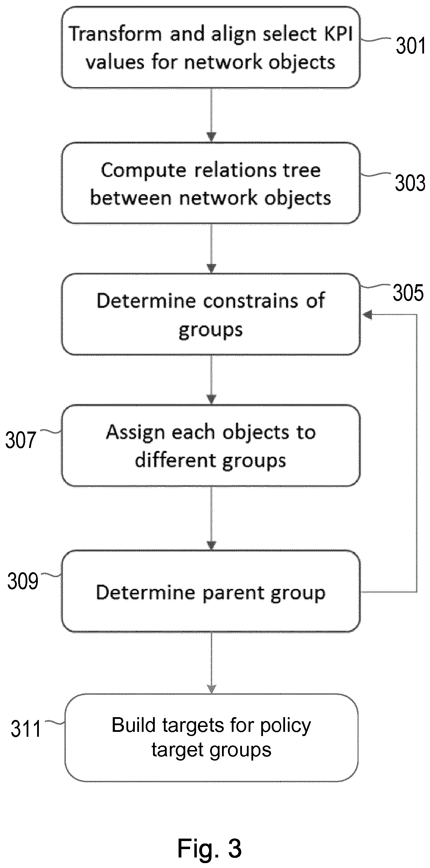

**Figure 3** shows an example of the steps that may be performed by a grouping processor, for example the grouping processor 20 according to Figure 2, according to an embodiment.

In step 301, the grouping processor is configured to transform and align selected KPIs for the plurality of network objects $x_1$ to $x_M$. The transformation and alignment is carried out in order to bring a set of KPIs into a common format between different network objects. The alignment may comprise, for example, aligning according to time stamps or time windows.

In step 303 the method comprises computing relations tree(s) between network objects, further details of which are described later. In step 305 the method comprises determining the constraints of groups. For example, this may include selecting a group size in order to determine how closely related the network objects within that group should be. Further details of this step are provided later. The method comprises assigning each object to different groups, step 307. Again, further details are provided later.

Once objects have been assigned to groups, the method may comprise determining one or more parent groups, step 309. The one or more parent groups may then be used, for example, to build targets for policy target groups, step 311.

Referring back to step 301 of Figure 3, the grouping processor is configured to transform and align selected KPIs for the plurality of network objects $x_1$ to $x_M$. The transformation and alignment is carried out in order to bring a set of KPIs into a common format between different network objects.

The grouping process is based on a function based on a plurality of KPIs common between the network objects $x_1$ to $x_M$. For example, if a KPI relating to *availability* of a network object is selected for the grouping process, then other network objects from the plurality of network objects $x_1$ to $x_M$ also require the *availability* KPI in order to enable the group processing to be performed for this KPI.

The *availability* KPI values for the plurality of network objects $x_1$ to $x_M$ are aligned. For example, if a network object A has seven numeric values for the *availability* KPI, i.e. one for each day of a week, then the other network objects from the plurality of network objects $x_1$ to $x_M$ will be aligned to also have seven *availability* values for a week.

In this way, representing network objects using a set of data vectors comprises correlating data vectors between a plurality of network objects, to align the data vectors into a common format between the plurality of network objects.

A set of correlated data vectors represent the final or combined KPIs of every network object $x_1$ to $x_M$.

For example, for the network object $x_1$, then $k_1$, $k_2$,..., $k_N$ are a set of KPIs of the network object x1.

$k_1\_x_1 = \{v1, v2, ..., vn\}$ is a data vector of the KPI $k_1$ of network object $x_1$.

$k_2\_x_1 = \{v1, v2 ..., vn\}$ is another data vector of the KPI $k_2$ of network object $x_1$.

The network object $x_1$ can therefore be represented as a set of KPI data vectors, which represent a function of a plurality of KPIs:

$$x_1 = \{k_1\_x_1, k_2\_x_1, \ldots, k_N\_x_1\}$$

This set of KPI data vectors represents behaviors, traffic patterns, etc., and different aspects of a network object depending upon which KPIs $k_1$ to $k_N$ are used.

In a similar manner, another network object $x_2$, as a consequence, may have a set of data vectors correlated with the network object $x_1$, such that:

$$x_2 = \{k_1\_x_2, k_2\_x_2, \ldots, k_N\_x_2\}.$$

The plurality of network objects $x_1$ to $x_M$ can be represented by a set of correlated data vectors which is constituted by KPI values. The number of KPIs selected and used to represent a network object depends on the types of network objects and use cases. For example, for root cause analysis in a fault management application, KPIs relating to *alarm* and *availability* may be used. For physical topology link reasoning, KPIs related to *traffic* may be used. For example, in the following matrix of Table 1 below, four *downlink throughput* and four *cell availability* KPI values at different time stamps are used to established the data vectors of cell network objects comprising Cell_01, Cell_02 and Cell_03.

**Table 1**

|  | DL_TPT at 12:00 | DL_TPT at 13:00 | DL_TPT at 14:00 | DL_TPT at 15:00 | CELL_ AVL at 14: 00 | CELL_ AVL at 15: 00 | CELL_ AVL at 16: 00 | CELL_ AVL at 17: 00 | ... |
|---|---|---|---|---|---|---|---|---|---|
| Cell_ 01 | 0.2 | 23 | 96 | 23 | 1.00 | 1.00 | 0.97 | 1.00 |  |
| Cell_ 02 | 0.3 | 23 | 86 | 32 | 1.00 | 0.95 | 1.00 | 1.00 |  |
| Cell_ 03 | 0.3 | 24 | 75 | 42 | 0.99 | 0.95 | 1.00 | 1.00 |  |
| ... |  |  |  |  |  |  |  |  |  |

Referring again to Figure 3, step 303 comprises the step of computing a relations tree between network objects. Since each of the plurality of network objects $x_1$ to $x_M$ are represented as a set data vectors, the relationship between the data vector sets will represent the relation or interconnectivity between the network objects $x_1$ to $x_M$.

For example, the relationship between data vector sets is computed based on a set of relation strength comparison functions, examples of which are listed below.

According to one embodiment, the strength of relations is computed between one KPI. The function below is an example of how a relation strength may be computed between data vectors of one KPI.

Assume k is one KPI selected to represent every network object of the plurality of network objects $x_1$ to $x_M$. $k\_x_1$ and $k\_x_2$ are first and second data vectors of the KPI k, i.e. corresponding to the KPIs of a first network object $x_1$ and second network object $x_2$, respectively. The strength of relation between the first and second network objects $x_1$, $x_2$ for KPI k may be based on a correlation function, for example based on a Pearson correlation coefficient as shown below:

$$r\_k(k\_x1, k\_x2) = \frac{\left(k\_x1 - \overline{k\_x1}\right) \cdot \left(k\_x2 - \overline{k\_x2}\right)}{\left\|k\_x1 - \overline{k\_x1}\right\| \left\|k\_x2 - \overline{k\_x2}\right\|}$$

It is noted that the function described above is merely an example of the type of function that may be used.

Other functions, including for example an absolute function (e.g. $r\_k =|r\_k|$), negative function (e.g. $r\_k =1- r\_k$) or other transformation functions may be applied depending on the KPI selected.

Examples of alternatives to the Pearson correlation coefficient include other relationship functions for the data vectors, for example such as Dynamic Time Wrapping, Spearman correlation, Euclidean distance (e.g. where data is compared on the same scale), or Cohen's d (e.g. to indicate a standardized difference between two means), and so on.

It is noted that, data vectors $k\_x1$, $k\_x2$ may be transformed before applying a relationship measure function for same cases. For example, a density estimation function may first be applied to data vectors to obtain probability density functions for each data vector. Then, for example, a Kolmogorov-Smirnov test relationship measure function may be used to compute a relation between probability density functions.

As an alternative to computing a strength of relations between network objects based on one KPI from the plurality of KPIs, according to another embodiment the strength of relations is computed based on a set of KPIs.

Computing a strength of relations between a set of KPIs is based on relations of each KPI of the set.

If $k_1$, $k_2$, ..., $k_N$ is a set of selected KPIs to represent network objects $x_1$ to $x_M$, and $r\_k\_1$, $r\_k\_2$, ......... $r\_k\_i$ are computed relation strength values between network objects for each KPI, then the relationship between network objects may be a weighted average of the relationship of each KPI.

$$r\_x(x1,x2) = \frac{\sum_{i=1}^{n} w\_i \cdot r\_k\_i}{\sum_{i=1}^{n} w\_i}$$

, where $w\_i$ is a weight assigned for KPI *ki.*

In one embodiment, as a default setting all KPIs can be set to have equal weight.

In addition to computing strength of relations between network objects to form a network object group, "g" (i.e. at the first architectural level mentioned earlier), according to another aspect it is possible to compute strength of relations between network object groups themselves (i.e. at the second architectural level mentioned earlier).

Computing the relation between network object groups is based on relations of network objects in groups. i.e. the r_x (x1, x2) function described above.

If a first network object group, g1, is assumed to contain z number of network objects, then:

$$g1 = \{g1\_x1, g1\_x2,…, g1\_xz\}$$

whereby g1_x1, g1_x2,..., g1_xz are network objects in the network object group g1.

If a second network object group, g2, is assumed to contain y number of network objects, then:

$$g2 = \{g2\_x1, g2\_x2,…, g2\_xy\}$$

whereby g2_x1, g2_x2,..., g2_xy are network objects in the network object group g2.

According to one example the relation between the first network object group g1 and the second network object group g2 may defined as the strongest relation between any network object of g1 and any network object of g2, such that:

$$r\_g(g1, g2) = max\{r\_x(g1\_x, g2\_x): g1\_x \in g1, g2\_x \in g2\}$$

According to an alternative example, an average relation function is used between network objects of groups, as per the following:

$$r\_g(g1, g2) = \frac{\sum_{g1\_x \in g1} \sum_{g2\_x \in g2} r\_x(g1\_x, g2\_x)}{|g1||g2|}$$

It is noted that, in other examples, other similar functions to those shown above may be used.

Referring back to step 303 of Figure 3, another stage in the process involves computing a hierarchical relation tree. In one example this comprises computing the relation tree based on a hierarchical clustering algorithm. For example, one approach to implement the algorithm is to use an agglomerative approach as described for example in a publication by Manning, C.D., P. Raghavan, and H. Schütze, Chapter 17: Hierarchical clustering, in Introduction to Information Retrieval. 2008, Cambridge University Press. Such an approach begins with each network object being a single group, and then finding and merging the strongest relation pair of groups in the current available groups. The relation between groups is computed based on the r_g(g1,g2) function described above. Such a process will merge the pair of groups in a bottom-up fashion until all network objects are in a single group.

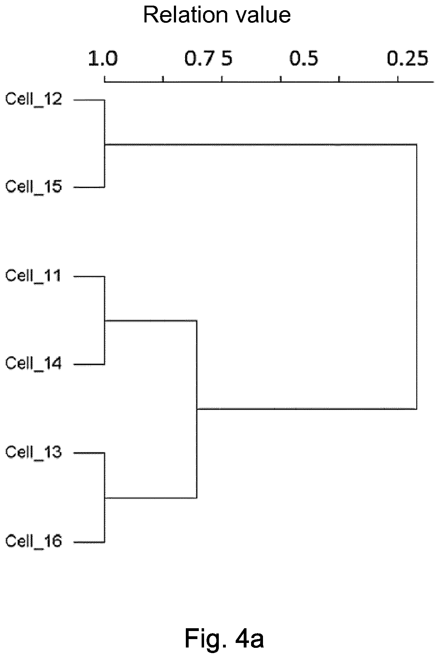

**Figure 4a** shows an example of relation tree of six network objects which are cells in this case, e.g. Cell_11, Cell_12, Cell_13, Cell_14, Cell_15 and Cell_16. The x-axis indicates a measure of relation, a "relation value", of either individual network objects or groups.

Referring back to step 305 of Figure 3, another step in the process involves determining the constraints of groups. For example, the larger the number of groups, then the smaller the size of each group with less network objects inside each group. Hence, network objects inside each group are more closely related to each other. Conversely, the smaller the number of groups, the larger the size of each group, with more network objects inside each group. In such a scenario less number of groups need to be handled.

A first threshold or configuration, such as a minimal strength of relations for network objects within a group, or/and minimal number network objects within a group can be used as constrains to determining the number of groups.

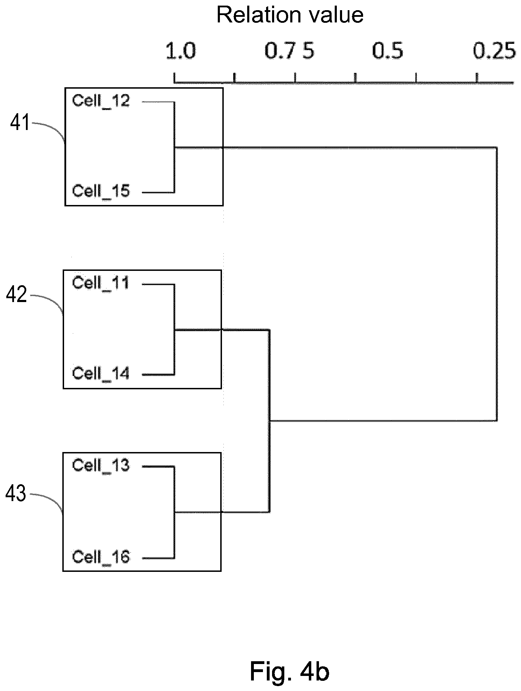

For example, in Figure 4a, the measure of relation strength, i.e. the relation value, is between 0.0 to 1.0, whereby a relation value of 1.0 indicates the strongest relation. If when determining the constraints of groups (e.g. in step 305 of Figure 3) the minimal relation value for objects within a group is set to 0.9, then each box in **Figure 4b** represents a network object group. As a result, in this example we have three different network object groups for the six network objects. In particular, a first network object group 41 comprises network objects Cell_12 and Cell_15 (i.e. because the relation value between these two network objects is shown as "1", hence above the first threshold of 0.9). A second network object group 42 comprises network objects Cell_11 and Cell_14 (i.e. because the relation value between these two network objects is also shown as "1"). A third network object group 43 comprises network objects Cell_13 and Cell_16 (i.e. because the relation value between these two network objects is also shown as "1").

Thus, when performing the step of assigning network objects to different groups, as per step 307 of Figure 3, if a first threshold value of 0.9 is chosen as a relation value relating to a function of a plurality of KPIs in common between the six network objects in the example of Figures 4a, then the network objects are grouped according to Figure 4b.

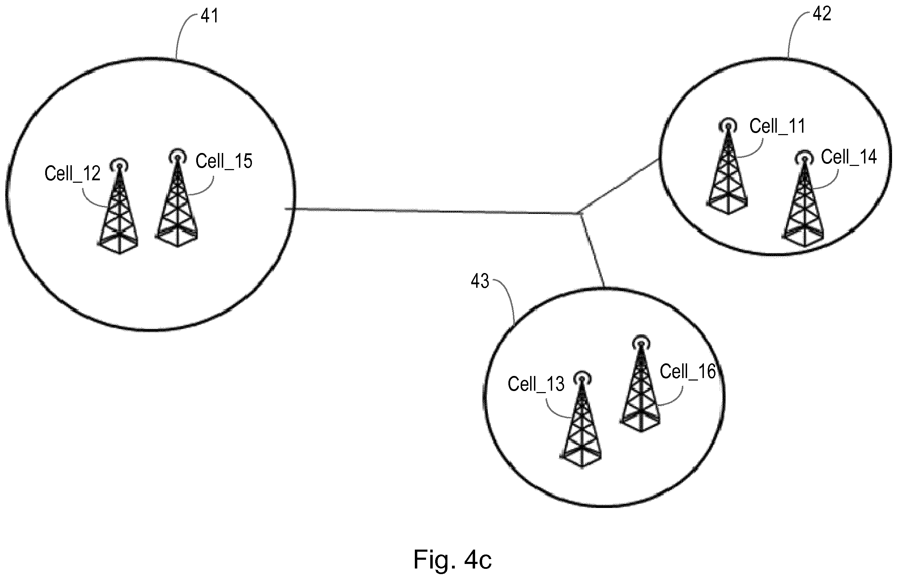

**Figure 4c** shows how the grouping of Figure 4b can be represented as a graph (which may be generated for example by the group graph builder module 24 of Figure 2).

After network objects are assigned to different groups, the grouping results can be stored, for example in a group knowledge base, e.g. group knowledge base 23 of Figure 2, and/or plotted as a group graph as shown in Figure 4c. In Figure 4c, the length of edges between groups can be based on the strength of relation between groups (for example whereby the shorter the length the stronger the relationship, and vice versa).

As mentioned previously, in addition to forming groups of network objects at a first hierarchical level (or child level), in some examples, different levels of groups may be needed. For example, a fine tuned policy may apply to a smaller group, e.g. at a child level, while a general policy may apply to a larger group, e.g. at a parent level. The larger groups can be parent groups comprising a set of smaller children groups.

Parent groups contain smaller or children groups. As a result, a network object can be in multiple groups depending on use cases.

Therefore, parent groups may be determined as per step 309 of Figure 3.

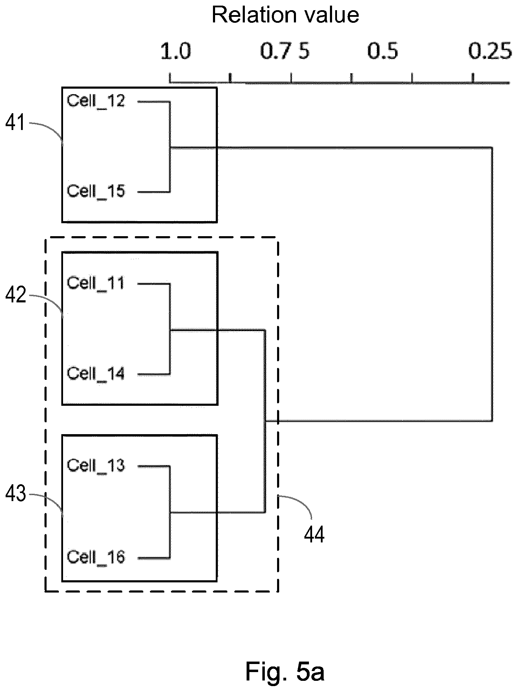

Referring to **Figure 5a**, if for example the relations tree of Figure 4a has the minimal relation strength for objects within a group set to a second threshold level of 0.75, then a parent group 44 is formed, comprising two smaller child groups 42 and 43, as shown in Figure 5a. This is because the strength of relationship between the network object group 42 and the network object group 43 is about 0.8, and hence above the second threshold level of 0.75. As a result, the network object groups 42 and 43 are assigned within the parent group 44.

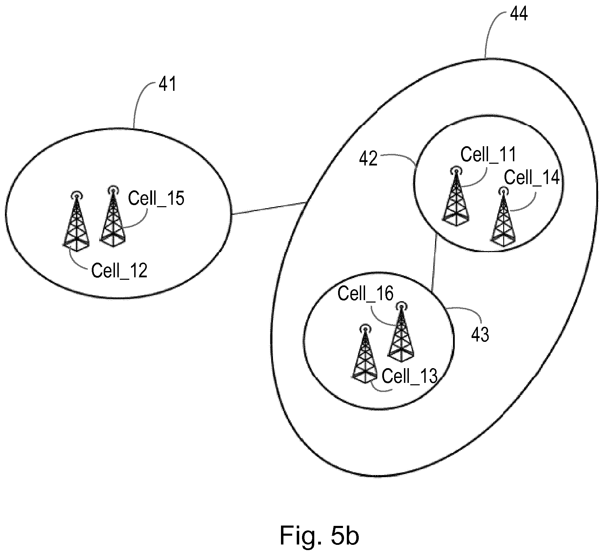

**Figure 5b** shows the parent and child groups of Figure 5a as a graphical illustration.

As mentioned previously in the system of Figure 2, all group knowledge of network objects can be saved in a group knowledge base 23 for different use cases, e.g. with different applications.

Once one or more network object groups have been identified according to one of the embodiments described above, application modules are then able, for example, to build targets of policy target groups, step 311 of Figure 3, based on the identified network object groups. For example, if there is a hierarchical structure in a policy model, then network objects in a parent group can be mapped as policy targets for a parent policy.

For example, in a scenario having three different resource priority policies and three different network object groups based on resource usage patterns, the system can receive IDs of network objects inside a group or using network object group ID as the target of a policy target group. As a result, a group of network objects can be managed by the same policy.

From the above it can be seen that the embodiments described herein group network objects based on a function of a plurality of KPIs of the network objects. This may involve computing a relation between network objects based on a set of common KPIs of objects. This may also involve computing a relation tree based on relation between network objects, and determining network object groups based on such relation trees. In some examples parent groups are also determined. The network object group ID can then be used as a target of a policy target group. Other applications of use cases include, for example: Fault diagnostic based on object groups, etc.

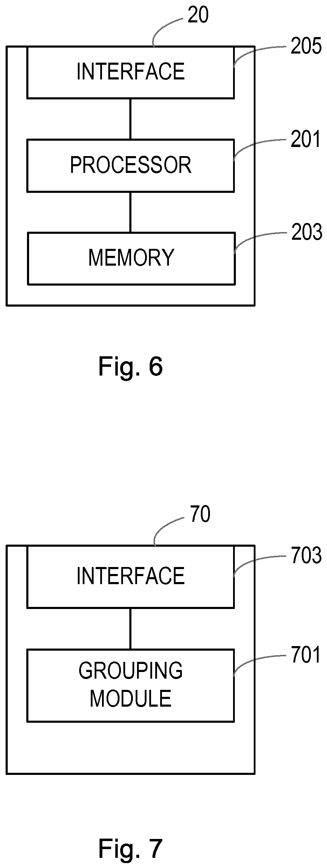

**Figure 6** shows an example of an apparatus 20 for identifying a network object group from a plurality of network objects $x_1$ to $x_M$ of a communications network. The apparatus 20 comprises a processor 201 and a memory 203. The memory 203 contains instructions executable by said processor 201. The apparatus 20 is operative to group network objects based on a function of a plurality of key performance indicators, KPIs $k_1$ to $k_N$, which are common to the plurality of network objects $x_1$ to $x_M$.

The processor 201 may be operative to perform other method steps as defined in the embodiments herein.

In a preferred embodiment the apparatus, 20, comprises an interface 205 for communication with other elements of the communications network.

**Figure 7** shows an example of an apparatus 70 according to another embodiment, for identifying a network object group from a plurality of network objects $x_1$ to $x_M$ of a communications network. The apparatus 70 comprises a grouping module 701 for grouping network objects based on a function of a plurality of key performance indicators, KPIs, $k_1$ to $k_N$, which are common to the plurality of network objects $x_1$ to $x_M$.

The grouping module 701 may be adapted to perform the method as defined in any one of the embodiments herein.

In a preferred embodiment the apparatus, 70, comprises an interface 703 for communication with other elements of the communications network.

In the embodiments above the network object grouping is based on KPIs which are observed or monitored in relation to the network objects.

The embodiments described above do not target on the physical topology or link discovery of a communications network (although it is noted that the embodiments could in turn be used to inference out topology groups based on KPIs relating to traffic, etc.). The network objects can be grouped in many different aspects depending on what KPIs are selected for logical connectivity/relations. For example, based on resource usage models (e.g. power consummation, bandwidth usage).

From the embodiments described above it can be seen that network objects, for example every network object, is represented by a data vector of its available KPIs. The data vectors are compared to determine the strength of relationship between network objects. Network objects having strong relationships can be grouped together to form basic and/or parent groups.

Object group knowledges can be used for various use cases of network management tasks. It also can be plotted as group graph for visualization.

The embodiments described herein for identifying network objects can be self-learning and adaptive, for example whereby network objects can be grouped and updated online in real or near real time.

Those skilled in the art will appreciate that the functions described above may be implemented in one or more nodes using hardware circuitry (e.g., analog and/or discrete logic gates interconnected to perform a specialized function, ASICs, PLAs, etc.) and/or using software programs and data in conjunction with one or more digital microprocessors or general purpose computers. Nodes that communicate using the air interface also have suitable radio communications circuitry. Moreover, where appropriate the technology can additionally be considered to be embodied entirely within any form of computer-readable memory, such as solid-state memory, magnetic disk, or optical disk containing an appropriate set of computer instructions that would cause a processor to carry out the techniques described herein.

Hardware implementation may include or encompass, without limitation, digital signal processor (DSP) hardware, a reduced instruction set processor, hardware (e.g., digital or analog) circuitry including but not limited to application specific integrated circuit(s) (ASIC) and/or field programmable gate array(s) (FPGA(s)), and (where appropriate) state machines capable of performing such functions.

In terms of computer implementation, a computer is generally understood to comprise one or more processors, one or more processing units, one or more processing modules or one or more controllers, and the terms computer, processor, processing unit, processing module and controller may be employed interchangeably. When provided by a computer, processor, processing unit, processing module or controller, the functions may be provided by a single dedicated computer, processor, processing unit, processing module or controller, by a single shared computer, processor, processing unit, processing module or controller, or by a plurality of individual computers, processors, processing units, processing modules or controllers, some of which may be shared or distributed. Moreover, these terms also refer to other hardware capable of performing such functions and/or executing software, such as the example hardware recited above.

It should be noted that the above-mentioned embodiments illustrate rather than limit the invention, and that those skilled in the art will be able to design many alternative embodiments without departing from the scope of the appended claims. The word "comprising" does not exclude the presence of elements or steps other than those listed in a claim, "a" or "an" does not exclude a plurality, and a single processor or other unit may fulfil the functions of several units recited in the claims. Any reference signs in the claims shall not be construed so as to limit their scope.

**Claims**

1. A method of identifying a network object group from a plurality of network objects ($x_1$ to $x_M$) of a communications network, the method comprising:
   grouping network objects based on a function of a plurality of key performance indicators, KPIs ($k_1$ to $k_N$), which are common to the plurality of network objects ($x_1$ to $x_M$), wherein grouping network objects based on a function of a plurality of KPIs comprises:

   > representing network objects of the plurality of network objects ($x_1$ to $x_M$) using a respective set of data vectors ($k_1\_x_1$ to $k_N\_x_1$ ...... $k_1\_x_M$ to $k_N\_x_M$), wherein a set of data vectors relates to the KPIs available at a network object; and is **characterised by**
   > comparing at least one data vector between a plurality of network objects ($x_1$ to $x_M$) to determine a relation value (r); and
   > identifying a network object group at a first hierarchical level if the network objects have a relation value (r) above a first threshold value.

2. A method as claimed in claim 1, wherein comparing at least one data vector between a plurality of network objects comprises:
   comparing a data vector relating to a single KPI common to the plurality of network objects ($x_1$ to $x_M$).

3. A method as claimed in claim 1, wherein comparing at least one data vector between a plurality of network objects comprises:
   comparing a sub-set of data vectors relating to a sub-set of KPIs common to the plurality of network objects ($x_1$ to $x_M$).

4. A method as claimed in any one of the preceding claims, wherein grouping network objects based on a function of a plurality of KPIs comprises using different relation measure functions to determine different network object groups.

5. A method as claimed in any one of the preceding claims, wherein grouping network objects based on a function of a plurality of KPIs comprises:

   > weighting different KPIs using respective weighting factors;
   > computing relation strength values between network objects using a plurality of weighted KPIs; and
   > grouping network objects at a first hierarchical level if a relation strength value between the network objects is above a first threshold value.

6. A method as claimed in any one of the preceding claims, further comprising:
   grouping two or more network object groups at a second hierarchical level.

7. A method as claimed in claim 6, wherein grouping two or more network object groups comprises:
   grouping according to the strongest relationship between any network object of a first network object group with any network object of a second network object group.

8. A method as claimed in claim 6, wherein grouping two or more network object groups comprises:
   grouping according to an average relation function between objects of a first group and objects of a second group.

9. A method as claimed in any one of claims 1 to 8, wherein the step of grouping network objects is repeated periodically in real time, or performed dynamically in response to one or more KPIs changing.

10. A method as claimed in any one of the preceding claims, comprising:
    creating one or more policy target groups based on the determined network object groups.

11. An apparatus (20) for identifying a network object group from a plurality of network objects ($x_1$ to $x_M$) of a communications network, the apparatus (20) comprising a processor (201) and a memory (203), said memory (203) containing instructions executable by said processor (201), whereby said apparatus (20) is operative to:
    group network objects based on a function of a plurality of key performance indicators, KPIs ($k_1$ to $k_N$), which are common to the plurality of network objects ($x_1$ to $x_M$), wherein to group network objects based on a function of a plurality of KPIs said apparatus is operative to:
    represent network objects of the plurality of network objects ($x_1$ to $x_M$) using a respective set of data vectors ($k_1\_x_1$

to $k_{N\_}x_1$ ...... $k_{1\_}x_M$ to $k_{N\_}x_M$), wherein a set of data vectors relates to the KPIs available at a network object; and the apparatus is **characterised by** being operative to:

compare at least one data vector between a plurality of network objects ($x_1$ to $x_M$) to determine a relation value (r); and
identify a network object group at a first hierarchical level if the network objects have a relation value (r) above a first threshold value.

**12.** An apparatus (20) as claimed in claim 11, wherein to compare at least one data vector between a plurality of network objects said apparatus (20) is operative to:
compare a data vector relating to a single KPI common to the plurality of network objects.

**13.** An apparatus (20) as claimed in claim 11, wherein to compare at least one data vector between a plurality of network objects said apparatus (20) is operative to:
compare a sub-set of data vectors relating to a sub-set of KPIs common to the plurality of network objects.

**14.** An apparatus (20) as claimed in any one of claims 11 - 13, wherein to group network objects based on a function of a plurality of KPIs said apparatus (20) is operative to use different relation measure functions to determine different network object groups.

**15.** An apparatus (20) as claimed in any one of claims 11 - 14, wherein to group network objects based on a function of a plurality of KPIs said apparatus (20) is operative to:

weight different KPIs using respective weighting factors;
compute relation strength values between network objects using a plurality of weighted KPIs; and
group network objects at a first hierarchical level if a relation strength value between the network objects is above a first threshold value.

**Patentansprüche**

**1.** Verfahren zur Identifizierung einer Netzwerkobjektgruppe aus einer Mehrzahl von Netzwerkobjekten ($x_1$ bis $x_M$) eines Kommunikationsnetzwerks, wobei das Verfahren umfasst:
Gruppieren von Netzwerkobjekten basierend auf einer Funktion einer Mehrzahl von Leistungskennzahlen, KPI, ($k_1$ bis $k_N$), die der Mehrzahl von Netzwerkobjekten ($x_1$ bis $x_M$) gemeinsam ist, wobei das Gruppieren von Netzwerkobjekten basierend auf einer Funktion einer Mehrzahl von KPIs umfasst:
Darstellen von Netzwerkobjekten der Mehrzahl von Netzwerkobjekten ($x_1$ bis $x_M$) unter Verwendung eines jeweiligen Satzes von Datenvektoren ($k_1$ $x_1$ bis $k_N$_$x_1$...... $k_{1\_}x_M$ bis $k_{N\_}x_M$), wobei ein Satz von Datenvektoren sich auf die KPIs bezieht, die an einem Netzwerkobjekt verfügbar sind; und **gekennzeichnet ist durch**:

Vergleichen mindestens eines Datenvektors zwischen einer Mehrzahl von Netzwerkobjekten ($x_1$ bis $x_M$), um einen Beziehungswert (r) zu bestimmen; und
Identifizieren einer Netzwerkobjektgruppe auf einer ersten Hierarchiestufe, wenn die Netzwerkobjekte einen Beziehungswert (r) über einem ersten Schwellenwert aufweisen.

**2.** Verfahren nach Anspruch 1, wobei das Vergleichen mindestens eines Datenvektors zwischen einer Mehrzahl von Netzwerkobjekten umfasst:
Vergleichen eines Datenvektors in Bezug auf eine einzige KPI, die der Mehrzahl von Netzwerkobjekten ($x_1$ bis $x_M$) gemeinsam ist.

**3.** Verfahren nach Anspruch 1, wobei das Vergleichen mindestens eines Datenvektors zwischen einer Mehrzahl von Netzwerkobjekten umfasst:
Vergleichen eines Teilsatzes von Datenvektoren in Bezug auf einen Teilsatz von KPIs, welcher der Mehrzahl von Netzwerkobjekten ($x_1$ bis $x_M$) gemeinsam ist.

**4.** Verfahren nach einem der vorhergehenden Ansprüche, wobei das Gruppieren von Netzwerkobjekten basierend auf einer Funktion einer Mehrzahl von KPIs ein Verwenden verschiedener Beziehungsmessungsfunktionen zum Bestimmen verschiedener Netzwerkobjektgruppen umfasst.

5. Verfahren nach einem der vorhergehenden Ansprüche, wobei das Gruppieren von Netzwerkobjekten basierend auf einer Funktion einer Mehrzahl von KPIs umfasst:

Gewichten verschiedener KPIs unter Verwendung jeweiliger Gewichtungsfaktoren;
Berechnen von Beziehungsstärkewerten zwischen Netzwerkobjekten unter Verwendung einer Mehrzahl von gewichteten KPIs; und
Gruppieren von Netzwerkobjekten auf einer ersten Hierarchiestufe, wenn ein Beziehungsstärkewert zwischen den Netzwerkobjekten über einem ersten Schwellenwert liegt.

6. Verfahren nach einem der vorhergehenden Ansprüche, ferner umfassend:
Gruppieren von zwei oder mehr Netzwerkobjektgruppen auf einer zweiten Hierarchiestufe.

7. Verfahren nach Anspruch 6, wobei Gruppieren von zwei oder mehr Netzwerkobjektgruppen umfasst:
Gruppieren gemäß der stärksten Beziehung zwischen einem Netzwerkobjekt einer ersten Netzwerkobjektgruppe mit einem Netzwerkobjekt einer zweiten Netzwerkobjektgruppe.

8. Verfahren nach Anspruch 6, wobei Gruppieren von zwei oder mehr Netzwerkobjektgruppen umfasst:
Gruppieren gemäß einer Durchschnittsbeziehungsfunktion zwischen Objekten einer ersten Gruppe und Objekten einer zweiten Gruppe.

9. Verfahren nach einem der Ansprüche 1 bis 8, wobei der Schritt des Gruppierens von Netzwerkobjekten periodisch in Echtzeit wiederholt oder in Reaktion auf eine Änderung einer oder mehrerer KPIs dynamisch durchgeführt wird.

10. Verfahren nach einem der vorhergehenden Ansprüche, umfassend ein Erstellen einer oder mehrere Richtlinienzielgruppen basierend auf den bestimmten Netzwerkobjektgruppen.

11. Vorrichtung (20) zum Identifizieren einer Netzwerkobjektgruppe aus einer Mehrzahl von Netzwerkobjekten ($x_1$ bis $x_M$) in einem Kommunikationsnetzwerk, wobei die Vorrichtung (20) einen Prozessor (201) und einen Speicher (203) umfasst, wobei der Speicher (203) Anweisungen enthält, die vom Prozessor (201) ausgeführt werden können, wodurch die Vorrichtung (20) ausgelegt ist zum:
Gruppieren von Netzwerkobjekten basierend auf einer Funktion einer Mehrzahl von Leistungskennzahlen, KPI, ($k_1$ bis $k_N$), die der Mehrzahl von Netzwerkobjekten ($x_1$ bis $x_M$) gemeinsam ist, wobei die Vorrichtung zum Gruppieren von Netzwerkobjekten basierend auf einer Funktion einer Mehrzahl von KPIs ausgelegt ist zum:
Darstellen von Netzwerkobjekten der Mehrzahl von Netzwerkobjekten ($x_1$ bis $x_M$) unter Verwendung eines jeweiligen Satzes von Datenvektoren ($k\_x_1$ bis $k_N\_x_1$... ...$k_1\_x_M$ bis $k_N\_x_M$), wobei ein Satz von Datenvektoren sich auf die KPIs bezieht, die an einem Netzwerkobjekt verfügbar sind; und die Vorrichtung **dadurch gekennzeichnet ist, dass** sie ausgelegt ist zum:

Vergleichen mindestens eines Datenvektors zwischen einer Mehrzahl von Netzwerkobjekten ($x_1$ bis $x_M$), um einen Beziehungswert (r) zu bestimmen; und
Identifizieren einer Netzwerkobjektgruppe auf einer ersten Hierarchiestufe, wenn die Netzwerkobjekte einen Beziehungswert (r) über einem ersten Schwellenwert aufweisen.

12. Vorrichtung (20) nach Anspruch 11, wobei die Vorrichtung (20) zum Vergleichen mindestens eines Datenvektors zwischen einer Mehrzahl von Netzwerkobjekten ausgelegt ist zum:
Vergleichen eines Datenvektors in Bezug auf eine einzige KPI, die der Mehrzahl von Netzwerkobjekten gemeinsam ist.

13. Vorrichtung (20) nach Anspruch 11, wobei die Vorrichtung (20) zum Vergleichen mindestens eines Datenvektors zwischen einer Mehrzahl von Netzwerkobjekten ausgelegt ist zum:
Vergleichen eines Teilsatzes von Datenvektoren in Bezug auf einen Teilsatz von KPIs, welcher der Mehrzahl von Netzwerkobjekten gemeinsam ist.

14. Vorrichtung (20) nach einem Ansprüche 11 bis 13, wobei die Vorrichtung (20) so ausgelegt ist, dass sie zum Gruppieren von Netzwerkobjekten basierend auf einer Funktion einer Mehrzahl von KPIs verschiedene Beziehungsmessungsfunktionen verwendet, um verschiedene Netzwerkobjektgruppen zu bestimmen.

15. Vorrichtung (20) nach einem Ansprüche 11 bis 14, wobei die Vorrichtung (20) zum Gruppieren von Netzwerkobjekten basierend auf einer Funktion einer Mehrzahl von KPIs ausgelegt ist zum:

Gewichten verschiedener KPIs unter Verwendung jeweiliger Gewichtungsfaktoren;
Berechnen von Beziehungsstärkewerten zwischen Netzwerkobjekten unter Verwendung einer Mehrzahl von gewichteten KPIs; und
Gruppieren von Netzwerkobjekten auf einer ersten Hierarchiestufe, wenn ein Beziehungsstärkewert zwischen den Netzwerkobjekten über einem ersten Schwellenwert liegt.

**Revendications**

1. Procédé d'identification d'un groupe d'objets de réseau parmi une pluralité d'objets de réseau ($x_1$ à $x_M$) d'un réseau de communication, le procédé comprenant :
le groupement d'objets de réseau sur la base d'une fonction d'une pluralité d'indicateurs de performances clés, KPI, ($k_1$ à $k_N$), qui sont communs à la pluralité d'objets de réseau ($x_1$ à $x_M$), dans lequel le groupement d'objets de réseau sur la base d'une fonction d'une pluralité de KPI comprend :

la représentation d'objets de réseau parmi la pluralité d'objets de réseau ($x_1$ à $x_M$) en utilisant un ensemble respectif de vecteurs de données ($k_1\_x_1$ à $k_N\_x_1$ ... $k_1\_x_M$ à $k_N\_x_M$), dans lequel un ensemble de vecteurs de données est en relation avec les KPI disponibles à un objet de réseau ; et est **caractérisé par**
la comparaison d'au moins un vecteur de données entre une pluralité d'objets de réseau ($x_1$ à $x_M$) pour déterminer une valeur de relation (r) ; et
l'identification d'un groupe d'objets de réseau à un premier niveau hiérarchique si les objets de réseau ont une valeur de relation (r) supérieure à une première valeur de seuil.

2. Procédé selon la revendication 1, dans lequel la comparaison d'au moins un vecteur de données entre une pluralité d'objets de réseau comprend :
la comparaison d'un vecteur de données en relation avec un KPI unique commun à la pluralité d'objets de réseau ($x_1$ à $x_M$).

3. Procédé selon la revendication 1, dans lequel la comparaison d'au moins un vecteur de données entre une pluralité d'objets de réseau comprend :
la comparaison d'un sous-ensemble de vecteurs de données en relation avec un sous-ensemble de KPI communs à la pluralité d'objets de réseau ($x_1$ à $x_M$).

4. Procédé selon l'une quelconque des revendications précédentes, dans lequel le groupement d'objets de réseau sur la base d'une fonction d'une pluralité de KPI comprend l'utilisation de différentes fonctions de mesure de relation pour déterminer différents groupes d'objets de réseau.

5. Procédé selon l'une quelconque des revendications précédentes, dans lequel le groupement d'objets de réseau sur la base d'une fonction d'une pluralité de KPI comprend :

la pondération de différents KPI en utilisant des facteurs de pondération respectifs ;
le calcul de valeurs de force de relation entre des objets de réseau en utilisant une pluralité de KPI pondérés ; et
le groupement d'objets de réseau à un premier niveau hiérarchique si une valeur de force de relation entre les objets de réseau est supérieure à une première valeur de seuil.

6. Procédé selon l'une quelconque des revendications précédentes, comprenant en outre :
le groupement de deux groupes d'objets de réseau ou plus à un deuxième niveau hiérarchique.

7. Procédé selon la revendication 6, dans lequel le groupement de deux groupes d'objets de réseau ou plus comprend :
le groupement selon la relation la plus forte entre tout objet de réseau d'un premier groupe d'objets de réseau et tout objet de réseau d'un deuxième groupe d'objets de réseau.

8. Procédé selon la revendication 6, dans lequel le groupement de deux groupes d'objets de réseau ou plus comprend :
le groupement selon une fonction de relation moyenne entre des objets d'un premier groupe et des objets d'un deuxième groupe.

9.  Procédé selon l'une quelconque des revendications 1 à 8, dans lequel l'étape du groupement d'objets de réseau est répétée périodiquement en temps réel ou est réalisée dynamiquement en réponse au changement d'un ou plusieurs KPI.

10. Procédé selon l'une quelconque des revendications précédentes, comprenant :
    la création d'un ou plusieurs groupes de cibles de politiques sur la base des groupes d'objets de réseau déterminés.

11. Appareil (20) d'identification d'un groupe d'objets de réseau parmi une pluralité d'objets de réseau ($x_1$ à $x_M$) d'un réseau de communication, l'appareil (20) comprenant un processeur (201) et une mémoire (203), ladite mémoire (203) contenant des instructions exécutables par ledit processeur (201), de telle manière que ledit appareil (20) soit opérationnel pour :
    le groupement d'objets de réseau sur la base d'une fonction d'une pluralité d'indicateurs de performances clés, KPI, ($k_1$ à $k_N$), qui sont communs à la pluralité d'objets de réseau ($x_1$ à $x_M$), dans lequel, pour le groupement d'objets de réseau sur la base d'une fonction d'une pluralité de KPI, ledit appareil est opérationnel pour :
    la représentation d'objets de réseau parmi la pluralité d'objets de réseau ($x_1$ à $x_M$) en utilisant un ensemble respectif de vecteurs de données ($k_1\_x_1$ à $k_N\_x_1$ ... $k_1\_x_M$ à $k_N\_x_M$), dans lequel un ensemble de vecteurs de données est en relation avec les KPI disponibles à un objet de réseau ; et l'appareil est **caractérisé en ce qu'**il est opérationnel pour :

    la comparaison d'au moins un vecteur de données entre une pluralité d'objets de réseau ($x_1$ à $x_M$) pour déterminer une valeur de relation (r) ; et
    l'identification d'un groupe d'objets de réseau à un premier niveau hiérarchique si les objets de réseau ont une valeur de relation (r) supérieure à une première valeur de seuil.

12. Appareil (20) selon la revendication 11, dans lequel, pour la comparaison d'au moins un vecteur de données entre une pluralité d'objets de réseau, ledit appareil (20) est opérationnel pour :
    la comparaison d'un vecteur de données en relation avec un KPI unique commun à la pluralité d'objets de réseau.

13. Appareil (20) selon la revendication 11, dans lequel, pour la comparaison d'au moins un vecteur de données entre une pluralité d'objets de réseau, ledit appareil (20) est opérationnel pour :
    la comparaison d'un sous-ensemble de vecteurs de données en relation avec un sous-ensemble de KPI communs à la pluralité d'objets de réseau.

14. Appareil (20) selon l'une quelconque des revendications 11 à 13, dans lequel, pour le groupement d'objets de réseau sur la base d'une fonction d'une pluralité de KPI, ledit appareil (20) est opérationnel pour l'utilisation de différentes fonctions de mesure de relation pour déterminer différents groupes d'objets de réseau.

15. Appareil (20) selon l'une quelconque des revendications 11 à 14, dans lequel, pour le groupement d'objets de réseau sur la base d'une fonction d'une pluralité de KPI, ledit appareil (20) est opérationnel pour :

    la pondération de différents KPI en utilisant des facteurs de pondération respectifs ;
    le calcul de valeurs de force de relation entre des objets de réseau en utilisant une pluralité de KPI pondérés ; et
    le groupement d'objets de réseau à un premier niveau hiérarchique si une valeur de force de relation entre les objets de réseau est supérieure à une première valeur de seuil.

START

101

Group network objects based on a
function of a plurality of key performance
indicators, KPIs, which are common to the
plurality of network objects

END

Fig. 1

Fig. 2

EP 3 560 145 B1

Fig. 3

Fig. 4a

Fig. 4b

Fig. 4c

EP 3 560 145 B1

Fig. 5a

Fig. 5b

Fig. 6

Fig. 7

**EP 3 560 145 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 02080458 A
- US 2013329588 A
- US 2013114464 A
- US 2008098332 A

**Non-patent literature cited in the description**

- **MANNING, C.D. ; P. RAGHAVAN ; H. SCHÜTZE.** Hierarchical clustering, in Introduction to Information Retrieval. Cambridge University Press, 2008